# EUROPEAN PATENT APPLICATION

(11) **EP 3 904 058 A1**
(43) Date of publication of application: **03.11.2021**
(21) Application number: 19903901.7
(22) Date of filing: 25.12.2019
(51) Int. Cl.: B29C 65/16, B29C 64/30

(54) **MANUFACTURING METHOD FOR RESIN MOLDED BODY AND RESIN MOLDED BODY**

(30) Priority: 28.12.2018 JP 2018248105
(71) Applicant: Mitsui Chemicals, Inc., Minato-ku Tokyo 105-7122 (JP)
(72) Inventor: ISAKI, Takeharu, Chiba 229-0265 (JP); FUJII, Shunsuke, Chiba 229-0265 (JP)
(74) Representative: Hoffmann Eitle
(86) International application number: PCT/JP2019/050838
(87) International publication number: WO 2020/138174

(57) **Abstract**

This manufacturing method for a resin molded body includes: a step in which an intermediate molded body made of a resin composition is prepared, the intermediate molded body having a rough surface with a maximum peak height (Rp) of 10-5000 µm measured according to JIS B 0601 or a maximum valley depth (Rv) of 10-5000 µm measured according to JIS B 0601; and a step in which a thin film-like molded body is fused to the rough surface of the intermediate molded body by irradiation with a laser, the thin film-like molded body being made of a resin composition containing reinforcing fibers arranged in one direction.

## Description

### Technical Field

The present invention relates to a method for manufacturing a resin shaped body and to the resin shaped body.

### Background Art

Forming a resin shaped body using an additive manufacturing method such as stereolithography (SLA), a material extrusion (MEX) method, a powder bed fusion (PBF) method, a sheet lamination method, a binder jetting method, or a material jetting method is a known process. These additive manufacturing methods are forming methods in which a resin shaped body having a desired shape is manufactured by sequentially forming layers that are obtained by dividing the resin shaped body in its height direction and stacking these formed layers.

For example, in the material extrusion (MEX) method, a filament-shaped resin composition melted or softened at high temperature is extruded from a nozzle and disposed two-dimensionally to form one of layers obtained by dividing a resin shaped body to be manufactured in its height direction. Then the melted or softened resin composition is further extruded from the nozzle and disposed so as to be in contact with the formed layer, and the next one of the divided layers is thereby formed. The rest of the layers are sequentially stacked in the manner described above, and the resin shaped body having the desired shape is manufactured. PTL 1 and PTL 2 describe molded bodies that contain a resin composition containing an olefin-based resin and can be used to manufacture a resin shaped body using the MEX method. The MEX method is also called a fused deposition modeling (FDM) method or a fused filament fabrication (FFF) method.

In a method used to form a large resin shaped article, an extruder is used to melt a resin composition, and the molten resin composition is extruded directly from a nozzle and disposed two-dimensionally.

In the powder bed fusion (PBF) method, particles of a resin composition spread over a stage are irradiated with a laser beam or an electron beam to sinter or fuse the particles together (hereinafter "both or one of sintering and fusion" is referred to simply as "fusion etc."), and one of layers that are obtained by dividing a resin shaped body to be manufactured in its height direction is thereby formed. Then particles of the resin composition are spread so as to be in contact with the formed layer and irradiated with the laser beam or the electron beam, and the next one of the divided layers is thereby formed. The rest of the layers are sequentially formed in the manner described above, and the resin shaped body having the desired shape is thereby manufactured. The SLS methods are classified into a selective laser sintering (SLS) method, a selective laser melting (SLM) method, and an electron beam melting (EBM) method according to whether the target is fused or sintered or whether the means used is a laser beam or an electron beam.

It is known that, in a resin shaped body manufactured by any of these additive manufacturing methods, steps derived from the shapes of edge portions of the layers manufactured and irregularities derived from the shape of the particles fused etc. remain present on the surface of the resin shaped body. Therefore, with the additive manufacturing methods described above, it is difficult to sufficiently improve the dimensional accuracy and appearance of the resin shaped body.

In the MEX method, the extent of irregularities on the surface of the resin shaped body depends on the diameter of the filament used. For example, as the diameter of the filament increases, the extent of irregularities tends to increase.

PTL 3 describes a method for manufacturing a three-dimensional shaped article including the step of ejecting an object forming ink that is curable by irradiation with ultraviolet light and a sacrificial layer forming ink that is not curable by irradiation with the ultraviolet light onto a layer of a powder for forming the article such that the two inks penetrate into the above layer. It is stated in PTL 3 that, by forming interfaces between regions with the two inks penetrating thereinto in the above layer, the occurrence of irregular steps (irregularities) on the outer surface of the three-dimensional shaped article is prevented, so that the three-dimensional shaped article manufactured can have a smooth outer surface.

### Citation List

### Patent Literature

PTL 1
   Japanese Patent Application Laid-Open No. 2018-035461
PTL 2
   WO 2017/057424
PTL 3
   Japanese Patent Application Laid-Open No. 2015-139977

### Summary of Invention

### Technical Problem

It is stated in PTL 3 that, with the method described, a three-dimensional shaped article having a smooth outer surface can be manufactured. However, the additive manufacturing method usable in the method described in PTL 3 is limited to the binder jetting method. With other additive manufacturing methods such as the MEX method and the PBF method, a three-dimensional shaped article having a smooth surface cannot be manufactured.

In view of the foregoing problems, it is an object of the present invention to provide a method for manufacturing a resin shaped body having a smooth surface using any of various additive manufacturing methods and to provide a resin shaped body manufactured by the above manufacturing method.

### Solution to Problem

To solve the foregoing problems, a resin shaped body manufacturing method according to an embodiment of the present invention includes: the step of preparing an intermediate shaped body formed of a resin composition and having a rough surface having a maximum peak height (Rp) of from 10 µm to 5000 µm inclusive as measured according to JIS B 0601 or a maximum valley depth (Rv) of from 10 µm to 5000 µm inclusive as measured according to JIS B 0601; and the step of fusing a thin-film body to the rough surface of the intermediate shaped body by irradiation with a laser beam, the thin-film body being formed of a resin composition containing reinforcing fibers aligned in one direction.

To solve the foregoing problems, a resin shaped body according to an embodiment of the present invention includes: an inner layer including thin resin composition layers stacked by sintering or fusion or including resin composition particles sintered or fused together; and a surface layer that is disposed in contact with the stacked layers or in contact with the particles sintered or fused together, sintered or fused to the inner layer, and formed of a resin composition containing aligned reinforcing fibers.

### Advantageous Effects of Invention

According to the present invention, a method for manufacturing a resin shaped body using any of various additive manufacturing methods is provided. With this method, a resin shaped body having a smooth surface is manufactured. Moreover, a resin shaped body manufactured by the above manufacturing method is provided.

### Brief Description of Drawings

FIG. 1A is a cross-sectional view schematically showing a method for manufacturing an intermediate shaped body using the MEX method;
FIG. 1B is a cross-sectional view schematically showing the intermediate shaped body manufactured using the MEX method;
FIG. 2A is a cross-sectional view schematically showing a method for manufacturing an intermediate shaped body using the SLS method;
FIG. 2B is a cross-sectional view schematically showing the intermediate shaped body manufactured using the SLS method;
FIG. 3 is a schematic illustration showing an example of a method for fusing a tape-shaped thin-film body using a fusing apparatus used to fuse the thin-film body to an intermediate shaped body by irradiation with a laser beam;
FIG. 4A is a schematic illustration showing a cross-sectional shape of an intermediate shaped body used to manufacture a resin shaped body according to an embodiment of the present invention; and
FIGS. 4B and 4C are schematic illustrations showing cross-sectional shapes of the resin shaped body manufactured using the intermediate shaped body shown in FIG. 4A.

### Description of Embodiments

### 1. Method for manufacturing resin shaped body

A resin shaped body manufacturing method according to an embodiment of the present invention includes: the step of preparing an intermediate shaped body formed of a resin composition and having a rough surface having a maximum peak height (Rp) of from 10 µm to 5000 µm inclusive as measured according to JIS B 0601 or a maximum valley depth (Rv) of from 10 µm to 5000 µm inclusive as measured according to JIS B 0601; and the step of fusing a thin-film body to the rough surface of the intermediate shaped body by irradiation with a laser beam, the thin-film body being formed of a resin composition containing reinforcing fibers aligned in one direction.

### 1-1. Step of preparing intermediate shaped body

The intermediate shaped body is a shaped body formed from a resin composition and having the rough surface having a maximum peak height (Rp) of from 10 µm to 5000 µm inclusive as measured according to JIS B 0601 or a maximum valley depth (Rv) of from 10 µm to 5000 µm inclusive as measured according to JIS B 0601. The intermediate shaped body may be prepared by purchasing, for example, a commercial product or may be prepared by forming a shaped body having the rough surface before this step.

### 1-1-1. Shape of intermediate shaped body and manufacturing thereof

Preferably, the intermediate shaped body has substantially the same shape as the resin shaped body to be manufactured, and the outer diameter of the intermediate shaped body is smaller by the thickness of the thin-film body to be fused etc. than the outer diameter of the resin shaped body to be manufactured.

The intermediate shaped body may be prepared by purchasing a commercial resin shaped body or may be prepared by manufacturing it using a well-known method.

The intermediate shaped body is, for example, a three-dimensional shaped body formed from a resin composition using an additive manufacturing method. No particular limitation is imposed on the additive manufacturing method, and any known method such as the stereolithography (SLA), the material extrusion (MEX) method, the powder bed fusion (PBF) method, the sheet lamination method, the binder jetting method, or the material jetting method may be used. In particular, with the MEX method and the PBF method, the rough surface satisfying the requirement on the maximum peak height (Rp) or the maximum valley depth (Rv) can be easily formed, so that the effect of allowing a smooth surface to be obtained using the method in the present embodiment is significant.

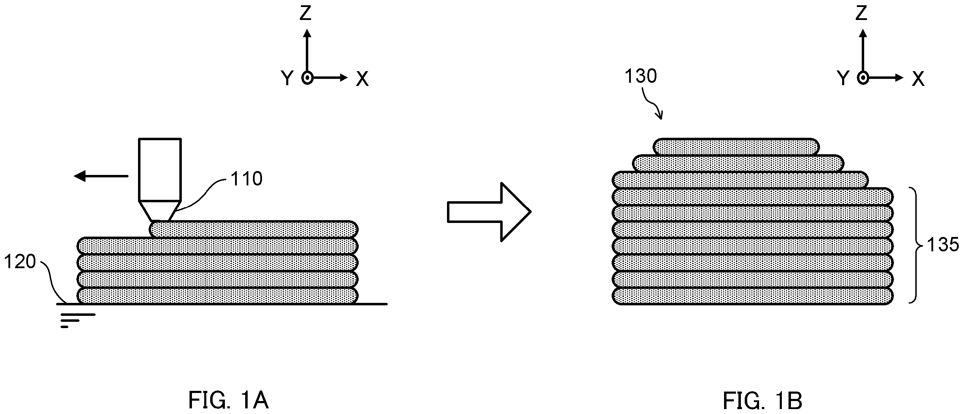

FIG. 1A is a cross-sectional view schematically showing the intermediate shaped body manufacturing method using the MEX method, and FIG. 1B is a cross-sectional view schematically showing the intermediate shaped body manufactured by the MEX method. In the MEX method, a resin composition melted or softened at high temperature is extruded from nozzle 110 and disposed two-dimensionally on stage 120 as shown in FIG. 1A. The resin composition extruded from nozzle 110 is cooled and solidified and forms one of layers obtained by dividing the intermediate shaped body in its height direction (the Z direction in FIG. 1A). The resin composition melted or softened at high temperature is further extruded from nozzle 110 and disposed two-dimensionally so as to be in contact with the previously formed layer. The resin composition newly extruded from nozzle 110 is then cooled and solidified and forms the next one of the layers obtained by dividing the intermediate shaped body in the height direction. In this case, the resin composition forming the previously formed layer and the resin composition forming the layer to be formed are fused together through the heat of the heated and extruded resin composition, and the previously formed layer and the layer to be formed are fused together and stacked one on another. Then the formation of a new layer by extrusion and solidification of the resin composition is repeated, and intermediate shaped body 130 is thereby formed (FIG. 1B). The thus-formed intermediate shaped body has rough surface 135 that is a surface extending in the stacking direction over the plurality of stacked layers and satisfies the requirement on the maximum peak height (Rp) or the maximum valley depth (Rv).

No particular limitation is imposed on the bore of the nozzle for the MEX method, and a nozzle having a well-known bore can be used. As the bore of the nozzle decreases, the maximum peak height (Rp) or the maximum valley depth (Rv) tends to decrease. As the bore of the nozzle increases, the maximum peak height (Rp) or the maximum valley depth (Rv) tends to increase.

In the MEX method, the maximum peak height (Rp) or the maximum valley depth (Rv) can be controlled, for example, not only by changing the bore of the nozzle diameter but also by changing the rate of extrusion or the temperature of the resin composition. When the rate of extrusion is increased, the maximum peak height (Rp) or the maximum valley depth (Rv) tends to increase because of the viscoelasticity effect of the resin composition. When the temperature of the resin composition is increased, the maximum peak height (Rp) or the maximum valley depth (Rv) tends to decrease.

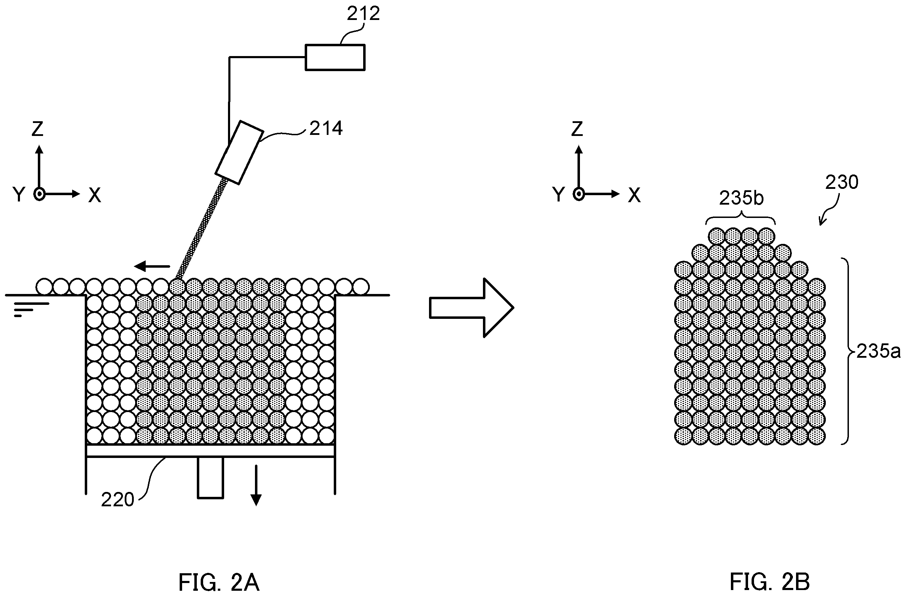

FIG. 2A is a cross-sectional view schematically showing an intermediate shaped body manufacturing method using the SLS method, which is one mode of the PBF method, and FIG. 2B is a cross-sectional view schematically showing the intermediate shaped body manufactured by the SLS method. As shown in FIG. 2A, in the SLS method, a laser beam oscillated by laser oscillation source 212 is directed through laser irradiation section 214, which is an objective lens unit, to resin composition particles spread over stage 220 that can be lowered vertically. The particles irradiated with the laser beam are sintered with particles adjacent thereto and irradiated with the laser beam, and one of layers obtained by dividing the intermediate shaped body in the height direction (the Z direction in FIG. 2A) is thereby formed. Then particles of the resin composition are further spread over the layer formed, and the layer of the spread particles is irradiated with the laser beam. The particles irradiated with the laser beam are sintered together, and the next one of the layers obtained by dividing the intermediate shaped body in the height direction is thereby formed. In this case, the resin composition forming the previously formed layer and the resin composition forming the layer to be formed are sintered together because of the heat generated by the irradiation with the laser beam, and the previously formed layer and the layer to be formed are sintered and stacked together. Then the spreading of particles of the resin composition and the formation of a new layer by irradiation with the layer beam are repeated, and intermediate shaped body 230 is thereby formed (FIG. 2B). The thus-formed intermediate shaped body has: rough surface 235a that is a surface extending in the stacking direction over the plurality of stacked layers and satisfies the requirement on the maximum peak height (Rp) or the maximum valley depth (Rv); and rough surface 235b that is a surface extending in a direction other than the stacking direction over a plurality of sintered particles and satisfies the requirement on the maximum peak height (Rp) or the maximum valley depth (Rv).

In the PBF method, the maximum peak height (Rp) or the maximum valley depth (Rv) can be controlled by changing, for example, the size of the resin composition particles.

Each of the rough surfaces described above is a surface whose maximum peak height (Rp) measured according to JIS B 0601 is from 10 µm to 5000 µm inclusive or whose maximum valley depth (Rv) measured according to JIS B 0601 is from 10 µm to 5000 µm inclusive. The rough surface satisfying the requirement on the maximum peak height (Rp) or the maximum valley depth (Rv) is a rough surface specific to a three-dimensional shaped body formed by an additive manufacturing method. Even when the surface of a three-dimensional shaped body formed by another forming method is subjected to surface roughening treatment such as blast treatment, the maximum peak height (Rp) or the maximum valley depth (Rv) is generally further reduced, and therefore a rough surface satisfying the requirement on the maximum peak height (Rp) or the maximum valley depth (Rv) is not obtained.

More specifically, on rough surface 135 of the intermediate shaped body formed by the MEX method, the maximum peak height (Rp) or the maximum valley depth (Rv) is generally from 20 µm to 450 µm inclusive, more typically from 20 µm to 400 µm inclusive, and still more typically from 30 µm to 350 µm inclusive. On rough surface 235a and rough surface 235b of the intermediate shaped body formed by the PBF method, the maximum peak height (Rp) or the maximum valley depth (Rv) is generally from 10 µm to 450 µm inclusive, more typically from 10 µm to 100 µm inclusive, and still more typically from 15 µm to 100 µm inclusive.

Preferably, each of the above rough surfaces has an arithmetic average roughness (Ra) of from 5 µm to 1250 µm inclusive as measured according to JIS B 0601. More specifically, rough surface 135 of the intermediate shaped body formed by the MEX method has an arithmetic average roughness (Ra) of generally from 5 µm to 1250 µm inclusive, more typically from 10 µm to 250 µm inclusive, and still more typically from 15 µm to 80 µm inclusive. Each of rough surface 235a and rough surface 235b of the intermediate shaped body formed by the PBF method has an arithmetic average roughness (Ra) of generally from 5 µm to 1000 µm inclusive, more typically from 6 µm to 100 µm inclusive, and still more typically from 7 µm to 50 µm inclusive.

### 1-1-2. Resin composition

The resin composition is a composition containing one or a plurality of resins and an optionally added additive.

The resin may be a thermoplastic resin, a thermosetting resin, or a photocurable resin. From the viewpoint increasing the flexibility in the shape of the resin shaped body and from the viewpoint of further smoothing the surface of the resin shaped body, the resin is preferably a thermoplastic resin. Examples of the thermoplastic resin include polyolefin resins, polyamide resins, polyester resins, polystyrene resins, thermoplastic polyimide resins, polyamide-imide resins, polycarbonate resins, polyphenylene ether resins, polyphenylene sulfide resins, polyacetal resins, acrylic resins, polyetherimide resins, polysulfone resins, polyether ketone resins, polyether ether ketone resins, polyarylate resins, polyether nitrile resins, vinyl chloride resins, ABS resins, and fluorocarbon resins. The resin may be an elastomer.

Examples of the thermosetting resin include epoxy resins, phenolic resins, melamine resins, urea resins, diallyl phthalate resins, silicone resins, urethane resins, furan resins, ketone resins, xylene resins, thermosetting polyimide resins, unsaturated polyester resins, and diallyl terephthalate resins.

The above resin preferably contains olefin-based resins including an ethylene-based polymer, a propylene-based polymer, and another α-olefin-based polymer, more preferably contains a propylene-based polymer, and still more preferably contains both a propylene-based polymer and another α-olefin-based polymer.

Examples of the ethylene-based polymer include homopolymers of ethylene and copolymers of ethylene with α-olefins having 3 to 20 carbon atoms. Only one of these ethylene-based polymers may be used alone, or a combination of two or more may be used.

Examples of the propylene-based polymer include homopolymers of propylene and copolymers of propylene with ethylene and α-olefins having 4 to 20 carbon atoms. Only one of these propylene-based polymer may be used alone, or a combination or two or more may be used.

Examples of the α-olefin-based polymer include homopolymers of α-olefins having 4 to 20 carbon atoms and copolymers of α-olefins having 2 to 20 carbon atoms (excluding the above ethylene-based and propylene-based polymers).

Examples of the α-olefin include ethylene, propylene, 1-butene, 3-methyl-1-butene, 4-methyl-1-pentene, 3-methyl-1-pentene, 4-methyl-1-hexene, 4,4 dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. The α-olefin-based polymer is preferably a copolymer containing 1-butene, ethylene, 4-methyl-1-pentene, and 1-hexene and more preferably a copolymer containing 1-butene and 4-methyl-1-pentene. The α-olefin-based polymer may be a random copolymer or may be a block copolymer and is preferably a random copolymer.

The above resin is preferably of the same type as the resin forming the thin-film body and is preferably of the same type as the matrix resin (described later) of the thin-film body. The phrase "resins of the same type" means that their bonding structures (such as ester structures or amide bonds) for bonding structural units derived from monomers in the main chains forming the resins are the same or the structural units are bonded through the same type of polymerizable group (such as a vinyl group). Preferably, the resins of the same type have structural units derived from the same monomer (such as ethylene or propylene).

Examples of the additive include well-known fillers (inorganic fillers and organic fillers), pigments, dyes, weathering stabilizers, thermal stabilizers, antistatic agents, antislip agents, antioxidants, mildewproofing agents, antimicrobial agents, flame retardants, and softening agents.

Examples of the filler used as the additive include: powder fillers containing mica, carbon black, silica, calcium carbonate, talc, graphite, stainless steel, aluminum, etc.; and fibrous fillers containing carbon fibers, glass fibers, metal fibers, metal oxide fibers, MOS-HIGE (basic magnesium sulfate inorganic fibers), calcium carbonate whiskers, etc. These fillers can increase the strength of the resin shaped body.

When the resin composition contains an appropriate amount of the fibrous filler, the occurrence of warpage of a shaped body when it is formed using the resin composition by an additive manufacturing method can be prevented. This may be because the fibrous filler suitably inhibits crystallization of the resin to prevent contraction of the resin. Therefore, the effect of preventing the occurrence of warpage is significant when the resin composition contains a crystalline resin and the fibrous filler. This effect is particularly significant when the resin composition contains the fibrous filler and a propylene-based polymer (in particular a propylene homopolymer) that tends to cause warpage.

In particular, a resin composition containing the propylene-based polymer (in particular a propylene homopolymer) in an amount of from 30mass% to 70mass% inclusive based on the total mass of the resin composition, the α-olefin-based polymer (excluding the propylene-based polymer. The α-olefin-based polymer is in particular an α-olefin-based random copolymer) in an amount of from 1mass% to 20mass% inclusive, and the fibrous filler (in particular carbon fibers and glass fibers) in an amount of from 20mass% to 60mass% inclusive is preferred because the occurrence of warpage that is a problem when a shaped body is formed from the propylene-based polymer using an additive manufacturing method can be effectively prevented.

Examples of the pigment and the dye used as the additives include well-known coloring agents. In particular, from the viewpoint of facilitating the fusion of the thin-film body under irradiation with a laser beam in the subsequent step, the pigment and the dye are preferably a pigment and a dye whose absorbance at the wavelength of the irradiation laser beam is large. Specifically, the pigment and the dye each preferably have a maximum absorption wavelength of from 300 nm to 3000 nm inclusive. The pigment and the dye each more preferably have a maximum absorption wavelength of from 500 nm to 2000 nm inclusive. Still more preferably, the pigment and the dye each have a maximum absorption wavelength of from 700 nm to 1500 nm inclusive. However, from the viewpoint of allowing the wavelength of the laser beam to be selected more freely, the pigment and the dye are preferably a pigment and a dye (or a combination thereof) that can absorb wavelengths in a wider range. Specifically, the pigment and the dye are preferably a black pigment and a black dye (or a combination thereof). More preferably, a carbon-based pigment is contained. Still more preferably, carbon black is contained.

It is only necessary that the contents of the pigment and the dye used as the additives be such that the absorption of the laser beam by the intermediate shaped body is increased sufficiently while other characteristics of the intermediate shaped body and the resin shaped body are not affected significantly. For example, the content of carbon black used as the additive is preferably from 0.1mass% to 10mass% inclusive and more preferably from 0.5mass% to 5mass% inclusive based on the total mass of the resin composition.

### 1-2. Step of fusing thin-film body

Next, the thin-film body formed of the resin composition containing the reinforcing fibers aligned in one direction is fused to the rough surface of the intermediate shaped body by irradiation with a laser beam.

In this case, when the thin-film body is simply bonded without irradiation with the laser beam, the irregularities forming the rough surface are not sufficiently absorbed by the thin-film body, so that a surface having a shape conforming to the shape of the rough surface remains on the outer side of the intermediate shaped body with the thin-film body bonded thereto. However, when at least one of the intermediate shaped body and the thin-film body is irradiated with the laser beam to fuse them together, the resin composition forming the intermediate shaped body and the resin composition forming the thin-film body are partially melted and fill the gap between the intermediate shaped body and the thin-film body, so that the extent of the irregularities forming the rough surface is reduced. Therefore, when the thin-film body is fused to the rough surface by irradiation with the laser beam, a smoother surface is formed on the outer side of the intermediate shaped body.

In particular, when the intermediate shaped body has a rough surface whose maximum peak height (Rp) measured according to JIS B 0601 is from 10 µm to 5000 µm inclusive or whose maximum valley depth (Rv) measured according to JIS B 0601 is from 10 µm to 5000 µm inclusive, the bending strength and bending modulus of the resin shaped body including the intermediate shaped body and the thin-film body fused thereto can be further increased. This may be because of the following reason. The intermediate shaped body and the thin-film body are well fused together, and the thin-film body extends into the bottoms of the valleys of the rough surface sufficiently, so that the intermediate shaped body and the thin-film body are joined together with no gap therebetween. The intermediate shaped body and the thin-film body are thereby more firmly joined together, and the degree of increase in strength by the thin-film body can be increased.

When the intermediate shaped body and the thin-film body are fused together by irradiation with the laser beam, they are melted at their interface and joined together more firmly. Therefore, delamination of a surface layer formed by fusing the thin-film body from the resin shaped body is unlikely to occur.

In this step, the thin-film body may be fused not only to the rough surface of the intermediate shaped body but also to a surface of the intermediate shaped body that does not satisfy the requirement on the maximum peak height (Rp) or the maximum valley depth (Rv). In this case, the resin shaped body obtained can have more uniform surface roughness.

In this step, a plurality of layers may be formed using the thin-film body. Specifically, the thin-film body may be further fused to the surface of the thin-film body fused to the rough surface of the intermediate shaped body or the surface that does not satisfy the requirement on the maximum peak height (Rp) or the maximum valley depth (Rv). In this case, the resin shaped body obtained can have further increased surface strength. The plurality of layers may include a combination of layers with different reinforcing fiber alignment directions or may include a combination of layers with the same reinforcing fiber alignment direction. From the viewpoint of increasing the pliability of the resin shaped body and its compressive resistance, it is preferable to include a combination of layers in which the reinforcing fiber alignment directions of two adjacent layers differ from each other.

### 1-2-1. Shape of thin-film body

The thin-film body is a shaped body prepared by impregnating the reinforcing fibers with a resin composition (hereinafter may be referred to as a "matrix resin").

The thin-film body is a sheet-shaped or tape-shaped (long) body. From the viewpoint of facilitating the fusion of the thin-film body, the thin-film body is preferably a tape-shaped body. The thickness of the thin-film body is preferably from 0.05 mm to 1.0 mm inclusive and more preferably from 0.1 mm to 0.5 mm inclusive.

No particular limitation is imposed on the width of the thin-film body, and the width may be appropriately selected according to the surface shape of the intermediate shaped body. For example, when the intermediate shaped body has streak-like irregularities on its surface and the thin-film body is disposed parallel to the streaks, it is preferable that the width of the thin-film body is larger than the width of the irregularities because a better appearance tends to be obtained. For example, the width of the thin-film body is preferably from 5 mm to 150 mm inclusive, more preferably from 7 mm to 100 mm inclusive, and still more preferably from 10 mm to 50 mm inclusive. The width of the thin-film body is preferably 5 mm or more because a trouble such as cutting of the thin-film body during fusion under irradiation with the laser beam is less likely to occur. The width of the thin-film body is preferably 150 mm or less because heating by the laser beam is facilitated.

The thin-film body has a surface whose arithmetic average roughness (Ra) measured according to JIS B 0601 is smaller than the arithmetic average roughness (Ra) of the rough surface of the intermediate shaped body. Specifically, the arithmetic average roughness (Ra) of the surface of the thin-film body that is measured according to JIS B 0601 is from 0.1 µm to 10 µm inclusive and preferably from 0.5 µm to 5 µm inclusive.

A commercial fiber reinforced resin may be purchased and prepared as the thin-film body, or the thin-film body may be manufactured using a known method including impregnating the reinforcing fibers with a resin composition for the matrix resin.

### 1-2-2. Matrix resin

No particular limitation is imposed on the type of resin used as the matrix resin, and the matrix resin may be a thermoplastic resin, a thermosetting resin, or a photocurable resin. From the viewpoint of further increasing the flexibility in the shape of the resin shaped body and from the viewpoint of further smoothing the surface of the resin shaped body, a thermoplastic resin is preferred. The resin composition may contain only one type of resin or may be a blend of two or more resins or a polymer alloy.

Examples of the thermoplastic resin includes polyolefin resins, polyamide resins, polyester resins, polystyrene resins, polyimide resins, polyamide-imide resins, polycarbonate resins, polyphenylene ether resins, polyphenylene sulfide resins, polyacetal resins, acrylic resins (such as polymethyl methacrylate), polyetherimide resins, polysulfone resins, polyethersulfone resins, polyketone resins, polyether ketone resins, polyether ether ketone resins, polyarylate resins, polyether nitrile resins, vinyl chloride resins, ABS resins, and fluorocarbon resins.

Examples of the polyolefin resin include ethylene-based polymers, propylene-based polymers, butylene-based polymers, and 4-methyl-1-pentene-based polymers.

Examples of the polyamide resin include aliphatic polyamide resins (such as nylon 6, nylon 11, nylon 12, nylon 66, nylon 610, and nylon 612), semi-aromatic polyamide resins (such as nylon 6T, nylon 61, and nylon 9T), and wholly aromatic polyamide resins.

Examples of the polyester resin include polyethylene terephthalate, polybutylene terephthalate, polytrimethylene terephthalate, and polyethylene naphthalate.

Examples of the thermosetting resin include epoxy resins, phenolic resins, melamine resins, urea resins, diallyl phthalate resins, silicone resins, urethane resins, furan resins, ketone resins, xylene resins, thermosetting polyimide resins, unsaturated polyester resins, and diallyl terephthalate resins.

From the viewpoint of preventing the surface layer formed from the fused thin-film body from being easily delaminated from the resin shaped body, it is preferable that the resin composition forming the intermediate shaped body and the resin composition forming the thin-film body contain the same type of resin. For example, when the intermediate shaped body is a shaped body containing a polyamide resin, it is preferable that the thin-film body is also a shaped body containing the polyamide resin.

When the intermediate shaped body is a shaped body containing a polyolefin resin, it is preferable that the thin-film body is also a shaped body containing the polyolefin resin. Moreover, when the intermediate shaped body is a shaped body containing an ethylene-based polymer, it is preferable that the thin-film body is also a shaped body containing the ethylene-based polymer. When the intermediate shaped body is a shaped body containing a propylene-based polymer, it is preferable that the thin-film body is also a shaped body containing the propylene-based polymer.

### 1-2-2-1. Polyolefin resin

From the viewpoint of obtaining excellent stiffness, high recyclability, and high speed formability, the thermoplastic resin composition preferably contains a polyolefin resin and more preferably contains a propylene-based polymer.

The propylene-based polymer used as the matrix resin may be an unmodified propylene-based copolymer or may be a propylene-based resin containing a carboxylic acid structure or a carboxylate structure introduced by, for example, modification. From the viewpoint of preventing a change in the structure between the reinforcing fibers and the propylene-based polymer during fusion using the laser beam to further increase the strength of the fused thin-film body, it is preferable that the propylene-based polymer used as the matrix resin contains both the unmodified propylene-based copolymer and the modified propylene-based copolymer. In this case, their mass ratio (the unmodified copolymer/the modified copolymer) is preferably 80/20 to 99/1, more preferably 89/11 to 99/1, still more preferably 89/11 to 93/7, and particularly preferably 90/10 to 95/5.

The propylene-based polymer used as the matrix resin may be a well-known propylene-based polymer such as homopolypropylene, random polypropylene, block polypropylene, or modified polypropylene. The tacticity of the propylene-based polymer used as the matrix resin may be isotactic, syndiotactic, or atactic and is preferably isotactic or syndiotactic.

The weight average molecular weight of the propylene-based polymer used as the matrix resin is preferably from 50000 to 350000 inclusive, more preferably from 100000 to 330000 inclusive, and still more preferably from 150000 to 320000 inclusive.

### 1-2-2-2. Polyamide resin

From the viewpoint of obtaining excellent toughness, wear resistance, heat resistance, oil resistance, and shock resistance, it is preferable that the thermoplastic resin composition contains a polyamide resin.

Examples of the polyamide resin include polyamide 4 (poly α-pyrrolidone), polyamide 6 (polycaproamide), polyamide 11 (polyundecanamide), polyamide 12 (polydodecanamide), polyamide 46 (polytetramethylene adipamide), polyamide 56 (polypentamethylene adipamide), polyamide 66 (polyhexamethylene adipamide), polyamide 610 (polyhexamethylene sebacamide), polyamide 612 (polyhexamethylene dodecamide), polyamide 116 (polyundecamethylene adipamide), polyamide TMHT (trimethylhexamethylene terephthalamide), polyamide 6T (polyhexamethylene terephthalamide), polyamide 2Me-5T (poly 2-methylpentamethylene terephthalamide), polyamide 9T (polynonamethylene terephthalamide), 2Me-8T (poly 2-methyloctamethylene terephthalamide), polyamide 61 (polyhexamethylene isophthalamide), polyamide 6C (polyhexamethylene cyclohexane dicarboxamide), polyamide 2Me-5C (poly 2-methylpentamethylene cyclohexane dicarboxamide), polyamide 9C (polynonamethylene cyclohexane dicarboxamide), 2Me-8C (poly 2-methyloctamethylene cyclohexane dicarboxamide), polyamide PACM12 (poly bis(4-aminocyclohexyl)methanedodecamide), polyamide dimethyl PACM12 (poly bis(3-methyl-aminocyclohexyl)methanedodecamide, polyamide MXD6 (poly meta-xylylene adipamide), polyamide 10T (polydecamethylene terephthalamide), polyamide 11T (polyundecamethylene terephthalamide), polyamide 12T (polydodecamethylene terephthalamide), polyamide 10C (polydecamethylene cyclohexane dicarboxamide), polyamide 11C (polyundecamethylene cyclohexane dicarboxamide), and polyamide 12C (polydodecamethylene cyclohexane dicarboxamide) ("Me" stands for a methyl group).

Among these polyamide-based resins, polyamide 6, polyamide 12, polyamide 66, polyamide 11, and aromatic polyamides are preferred, and polyamide 6 and polyamide 12 are more preferred.

From the viewpoint of facilitating the fusion using the laser beam and facilitating the formation of the thin-film body, the melting point (Tm) or glass transition temperature (Tg) of the polyamide resin measured by differential scanning calorimetry (DSC) is preferably from 30°C to 350°C inclusive, more preferably from 30°C to 230°C inclusive, and still more preferably from 30°C to 180°C inclusive.

From the viewpoint of further increasing the mechanical strength of the thin-film body, the weight average molecular weight (Mw) of the polyamide resin is preferably from 10000 to 20000 inclusive, more preferably from 10000 to 18000 inclusive, and still more preferably from 10500 to 17000 inclusive.

From the viewpoint of facilitating impregnation of the reinforcing fibers with the matrix resin, the number average molecular weight (Mn) of the polyamide resin is preferably from 2000 to 10000 inclusive, more preferably from 2500 to 8000 inclusive, and still more preferably from 2800 to 7600 inclusive.

From the viewpoint of increasing the mechanical strength of the thin-film body and facilitating the impregnation of the reinforcing fibers with the matrix resin simultaneously, the ratio of the weight average molecular weight of the polyamide resin to its number average molecular weight (Mw/Mn) is preferably from 2.00 to 5.00 inclusive, more preferably from 2.10 to 4.00 inclusive, and still more preferably from 2.15 to 3.80 inclusive.

The weight average molecular weight (Mw) and the number average molecular weight (Mn) are measured by gel permeation chromatography (GPC) and computed as styrene-equivalent values.

The melt flow rate (MFR) of the polyamide resin that is measured at a temperature of 230°C and a load of 2.16 kg according to ASTM D1238 is preferably from 100 g/10 min to 350 g/10 min inclusive, more preferably from 100 g/10 min to 320 g/10 min inclusive, and still more preferably from 100 g/10 min to 230 g/10 min inclusive. When the MFR of the polyamide resin is within the above range, the reinforcing fibers can be easily impregnated with the matrix resin, and the matrix resin can easily fill the recessed portions of the irregularities forming the rough surface during fusion using the laser beam. Therefore, the surface of the resin shaped body is further smoothed, and the surface layer of the resin shaped body that is formed from the thin-film body can be prevented from being easily delaminated.

From the viewpoint of increasing the adhesion to carbon fibers, the amount of terminal carboxylic acid groups in the polyamide resin is preferably from 65 mmol/kg to 100 mmol/kg inclusive, more preferably from 68 mmol/kg to 95 mmol/kg inclusive, still more preferably from 68 mmol/kg to 85 mmol/kg inclusive, and particularly preferably from 68 mmol/kg to 75 mmol/kg inclusive.

From the viewpoint of increasing the adhesin to the carbon fibers, the amount of terminal amino groups in the polyamide resin is preferably from 5 mmol/kg to 50 mmol/kg inclusive.

### 1-2-3. Reinforcing fibers

The reinforcing fibers are a fibrous material added to the resin composition in order to increase the strength of the shaped body formed from the resin composition. Examples of the reinforcing fibers include carbon fibers, glass fibers, aramid fibers, silicon carbide fibers, boron fibers, metal fibers, metal oxide fibers (such as alumina fibers), MOS-HIGE (basic magnesium sulfate inorganic fibers), and calcium carbonate whiskers. Of these, carbon fibers and glass fibers are preferred, and carbon fibers are more preferred.

The average fiber diameter of the reinforcing fibers is preferably from 1 µm to 20 µm inclusive and more preferably from 3 µm to 15 µm inclusive. When the average fiber diameter is 3 µm or more, it is sufficient that, when, for example, the reinforcing fibers are bundled, a smaller amount of reinforcing fibers be bundled, so that the resin composition productivity can be increased. When the average fiber diameter is 1 µm or more, the reinforcing fibers are unlikely to be damaged, so that the strength of an injection molded body can be increased. When the average fiber diameter is 20 µm or less, the aspect ratio of the reinforcing fibers can be easily increased, so that a reduction in the strength of the injection molded body can be prevented.

Typically, the reinforcing fibers are used in the form of fiber bundles, and the fiber bundles aligned in one direction are contained in the thin-film body. No particular limitation is imposed on the number of fibers contained in each bundle. The number of fibers in each bundle is preferably from 100 to 350,000 inclusive, more preferably from 1,000 to 250,000 inclusive, and still more preferably from 5,000 to 220,000 inclusive.

No particular limitation is imposed on the type of carbon fibers. Any of various carbon fibers such as polyacrylonitrile (PAN)-based carbon fibers, rayon-based carbon fibers, polyvinyl alcohol-based carbon fibers, regenerated cellulose, and pitch-based carbon fibers produced from mesophase pitch can be used. Of these, PAN-based carbon fibers, rayon-based carbon fibers, and pitch-based carbon fibers are preferred because of their higher strength and lighter weight.

The carbon fibers may be coated with a conductive material such as nickel, copper, or ytterbium according to the application of the resin shaped body.

The epoxy content of the carbon fibers is preferably from 0.1mass% to 10mass% and more preferably from 0.5mass% to 9mass% inclusive.

By using, for example, an epoxy-based resin as a sizing agent, the epoxy content of the carbon fibers can be increased to the above range.

The tensile strength of the carbon fibers is preferably from 2500 MPa to 6000 MPa inclusive, more preferably from 3500 MPa to 6000 MPa inclusive, and still more preferably from 4500 MPa to 6000 MPa inclusive. When the tensile strength is 2500 MPa or more, the mechanical strength of an injection molded body can be further increased. When the tensile strength is 6000 MPa or less, the formation of an injection molded body, particularly extrusion and extrusion molding, is further facilitated.

Preferably, the carbon fibers are in the form of a carbon fiber tow composed of several thousand to several tens of thousand bundled filaments. The number of filaments forming one tow may be from 500 to 80000 inclusive and is preferably from 12000 to 60000 inclusive.

Preferably, the surface of the carbon fibers has been subjected to surface treatment such as oxidative etching or coating treatment. Examples of the oxidative etching treatment include air oxidation treatment, oxygen treatment, treatment with oxidative gas, ozone treatment, corona treatment, flame treatment, (atmospheric pressure) plasma treatment, and treatment with an oxidative liquid (such as nitric acid, an aqueous solution of alkali metal hypochlorite, potassium dichromate-sulfuric acid, and potassium permanganate-sulfuric acid). Examples of the material covering the carbon fibers include carbon, silicon carbide, silicon dioxide, silicon, a plasma monomer, ferrocene, and iron trichloride. If necessary, a sizing agent such as a urethane-based, olefin-based, acrylic-based, nylon-based, butadiene-based, or epoxy-based sizing agent may be used.

When the matrix resin is, for example, the polyolefin resin described above (in particular the above-described propylene-based polymer), it is preferable that the sizing agent is a propylene-based polymer. When the matrix resin is the polyamide resin described above, it is preferable that the sizing agent is an epoxy-based resin.

### 1-2-3-1. Propylene-based polymer

More preferably, the propylene-based polymer used as the sizing agent contains a propylene-based polymer (A1) and an acid-modified polyolefin-based resin (A2).

The propylene-based polymer (A1) may be a propylene homopolymer or may be a copolymer of propylene with another α-olefin. The propylene-based polymer (A1) may be composed of one polymer having substantially a single compositional ratio and a single structure or may be a combination of two or more polymers having different compositional ratios, structures, etc. Among these polymers, the propylene-based polymer (A1) is more preferably at least one propylene-based polymer selected from propylene homopolymers, propylene-ethylene block copolymers, and propylene-ethylene random copolymers containing ethylene in an amount of 5mass% or less.

The propylene-based polymer (A1) may contain two propylene-based polymers having different weight average molecular weights (Mw). Among these two propylene-based polymers, the propylene-based polymer having a larger Mw (hereinafter referred to simple as "PP(A1)-1") has an Mw of 50,000 or more, and the propylene-based polymer having a smaller Mw (hereinafter referred to simply as "PP(A1)-2") has an Mw of 100,000 or less.

The Mw of the PP(A1)-1 is preferably 70,000 or more and more preferably 100,000 or more. From the viewpoint of facilitating extrusion from a nozzle or facilitating melting under irradiation with a laser beam, the Mw of the PP(A1)-1 is preferably 700,000 or less, more preferably 500,000 or less, still more preferably 450,000 or less, and particularly preferably 400,000 or less.

The Mw of the PP(A1)-2 is preferably 50,000 or less and more preferably 40,000 or less. From the viewpoint of increasing the strength of the resin shaped body and reducing the stickiness of its surface, the Mw of the PP(A1)-2 is preferably 10,000 or more, more preferably 15,000 or more, still more preferably 20,000 or more, and particularly preferably 25,000 or more.

In the propylene-based polymer (A1), the ratio of the total mass of the PP(A1)-1 to the sum of the total mass of the PP(A1)-1 and the total mass of the PP(A1)-2 is 60mass% or more and less than 100mass%, and the ratio of the total mass of the PP(A1)-2 to the sum is more than 0mass% and 40mass% or less. The ratio of the total mass of the PP(A1)-1 is preferably more than 70mass% and less than 100mass% and more preferably more than 73mass% and less than 100mass%. The ratio of the total mass of the PP(A1)-2 is preferably more than 0mass% and less than 30mass% and more preferably more than 0mass% and less than 27mass%.

The acid-modified polyolefin-based resin (A2) is a modified product obtained by modifying a polyolefin-based polymer with, for example, an acid. No particular limitation is imposed on the acid, and unsaturated carboxylic acids and derivatives thereof are preferred.

The acid-modified polyolefin-based resin (A2) increases the interfacial adhesion of the thermoplastic resin composition to the carbon fibers, so that the effect of the carbon fibers on the reinforcement of the thermoplastic resin composition is obtained sufficiently.

Examples of the unsaturated carboxylic acid used for the modification include acrylic acid, methacrylic acid, maleic acid, fumaric acid, tetrahydrofumaric acid, itaconic acid, crotonic acid, citraconic acid, crotonic acid, isocrotonic acid, sorbic acid, mesaconic acid, and angelic acid. Examples of the derivatives include acid anhydrides, esters, amides, imides, and metal salts of the above unsaturated carboxylic acids. Specific examples of the derivatives include maleic anhydride, itaconic anhydride, citraconic anhydride, methyl acrylate, methyl methacrylate, ethyl acrylate, propyl acrylate, butyl acrylate, ethyl maleate, acrylamide, maleic acid amide, sodium acrylate, and sodium methacrylate. Of these, unsaturated dicarboxylic acids and derivatives thereof are preferred, and maleic acid and maleic anhydride are more preferred. The acid-modified polyolefin-based resin (A2) may be a modified product modified with one type of acid or a derivative thereof or may be a modified product modified with two or more types of acids or a derivative thereof.

The acid-modified polyolefin-based resin (A2) is preferably an acid-modified propylene-based polymer or an acid-modified ethylene-based polymer, more preferably a maleic acid-modified propylene-based polymer or a maleic acid-modified ethylene-based polymer, and still more preferably a maleic acid-modified propylene-based polymer.

### 1-2-3-2. Epoxy-based resin

It is only necessary that the epoxy-based resin used as the sizing agent be an epoxy-based resin generally used as a sizing agent. The epoxy-based resin is preferably a polyfunctional epoxy-based resin such as a bisphenol A-type epoxy resin, a bisphenol F-type epoxy resin, an aliphatic epoxy resin, or a phenol novolac-type epoxy resin and is more preferably an aliphatic epoxy resin from the viewpoint of further increasing the adhesion to the polyamide resin. Since the aliphatic epoxy resin has a flexible skeleton, toughness tends to be high even when the crosslink density is high. Therefore, the aliphatic epoxy resin can effectively prevent delamination between the reinforcing fibers and the matrix resin, and the strength of the thin-film body is easily increased.

Examples of the aliphatic epoxy resin include: diglycidyl ether compounds such as ethylene glycol diglycidyl ether, polyethylene glycol diglycidyl ether, propylene glycol diglycidyl ether, polypropylene glycol diglycidyl ether, 1,4-butanediol diglycidyl ether, neopentyl glycol diglycidyl ether, polytetramethylene glycol diglycidyl ether, and polyalkylene glycol diglycidyl ethers; and polyglycidyl ether compounds such as glycerol polyglycidyl ether, diglycerol polyglycidyl ether, polyglycerol polyglycidyl ether, sorbitol polyglycidyl ether, arabitol polyglycidyl ether, trimethylolpropane polyglycidyl ether, pentaerythritol polyglycidyl ether, and polyglycidyl ethers of aliphatic polyhydric alcohols.

Of these, polyglycidyl ether compounds having many highly reactive glycidyl groups are preferred, and glycerol polyglycidyl ether, diglycerol polyglycidyl ether, polyethylene glycol glycidyl ether, and polypropylene glycol glycidyl ether are more preferred.

### 1-2-4. Pigment and dye

The thin-film body may contain a pigment and/or a dye. Examples of the pigment and the dye include well-known coloring agents. When the reinforcing fibers are colorless fibers such as glass fibers, the pigment and the dye are preferably a pigment and a dye whose absorbance at the wavelength of a laser beam used for irradiation in a subsequent step is large, from the viewpoint facilitating fusion to the intermediate shaped body by irradiation with the laser beam. Specifically, the pigment and the dye each preferably have a maximum absorption wavelength of from 300 nm to 3000 nm inclusive. More preferably, the pigment and the dye each have a maximum absorption wavelength of from 500 nm to 2000 nm inclusive. Still more preferably, the pigment and the dye each have a maximum absorption wavelength of from 700 nm to 1500 nm inclusive. However, from the viewpoint of allowing the wavelength of the laser beam to be selected more freely, the pigment and the dye are preferably a pigment and a dye (or a combination thereof) that can absorb wavelengths in a wider range. Specifically, the pigment and the dye are preferably a black pigment and a black dye (or a combination thereof). More preferably, a carbon-based pigment is contained. Still more preferably, carbon black is contained.

It is only necessary that the contents of the pigment and the dye be such that the absorption of the laser beam by the thin-film body is increased sufficiently while other characteristics of the thin-film body and the resin shaped body such as their strength are not affected significantly. For example, the content of carbon black used as the additive is preferably from 0.01mass% to 5mass% inclusive, more preferably from 0.1mass% to 3mass% inclusive, and still more preferably from 0.1mass% to 2mass% inclusive based on the total mass of the thin-film body.

### 1-2-5. Fusion of thin-film body

The thin-film body can be fused to the rough surface of the intermediate shaped body by a well-known fusing method using a laser.

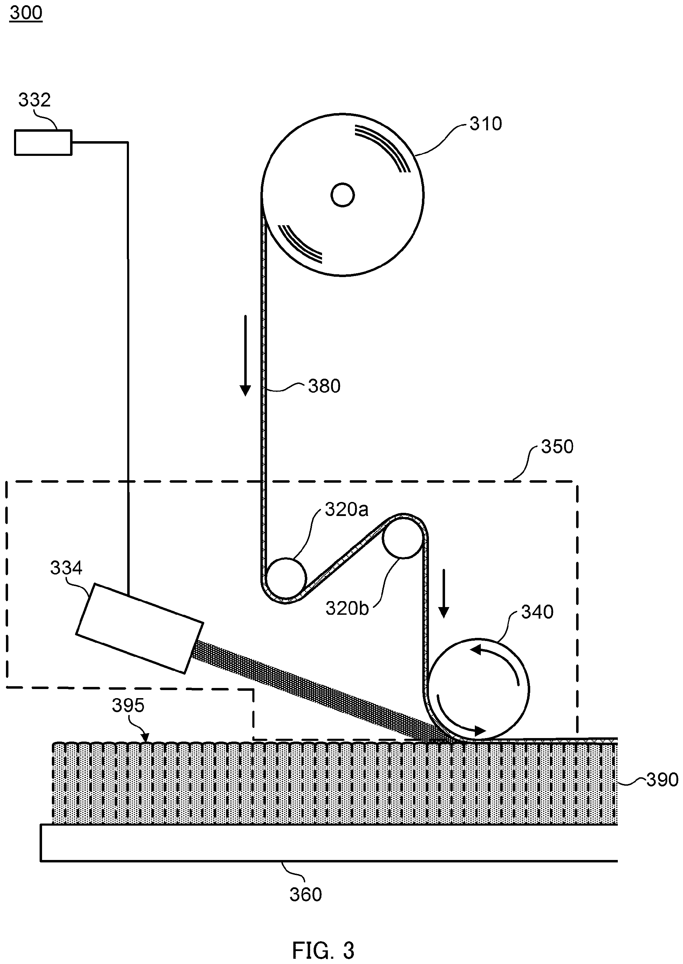

FIG. 3 is a schematic illustration showing an examples of a thin-film body fusing method that uses a fusing apparatus for fusing a tape-shaped thin-film body to a rough surface of an intermediate shaped body by irradiation with a laser beam. FIG. 3 shows how the tape-shaped thin-film body is fused to the rough surface of the intermediate shaped body formed by the MEX method by irradiation with the laser beam. Also when the tape-shaped thin-film body is fused to a rough surface of an intermediate shaped body formed by another additive manufacturing method such as the PBF method, the tape-shaped thin-film body can be fused by irradiation with the laser beam in the same manner as above.

Fusing apparatus 300 includes: housing section 310 that houses thin-film body 380 wound into a roll such that thin-film body 380 can be fed; guide rollers 320a and 320b that support thin-film body 380 fed from housing section 310 and guide thin-film body 380 to intermediate shaped body 390; laser oscillation source 332; laser irradiation section 334 that is an objective lens unit used to direct a laser beam oscillated from laser oscillation source 332 to at least one of thin-film body 380 and intermediate shaped body 390 to be joined together; and pressing roller 340 that presses thin-film body 380 disposed on rough surface 395 of intermediate shaped body 390 down against intermediate shaped body 390. In the present embodiment, fusing apparatus 300 includes fusing unit 350 including guide rollers 320a and 320b, laser irradiation section 334, and pressing roller 340 that are attached together and integrated. Fusing apparatus 300 further includes holding stage 360 that holds intermediate shaped body 390. In fusing apparatus 300, at least one of fusing unit 350 and holding stage 360 is moved, and the position at which thin-film body 380 is joined to rough surface 395 of intermediate shaped body 390 can thereby be moved.

Housing section 310 houses thin-film body 380 wound into a roll and feeds thin-film body 380 to fuse it to intermediate shaped body 390. It is only necessary that the feeding speed of thin-film body 380 (the moving speed of thin-film body 380) be such that thin-film body 380 can be sufficiently fused to intermediate shaped body 390 by irradiation with the laser beam. The feeding speed can be selected, for example, in the range of from 10 m/min to 100 m/min inclusive and is preferably selected in the range of from 30 m/min to 90 m/min inclusive.

Guide rollers 320a and 320b are disposed in contact with a moving path of thin-film body 380 that connects housing section 310 to rough surface 395 of intermediate shaped body 390 to which thin-film body 380 is to be fused. Guide rollers 320a and 320b support thin-film body 380 moving along the moving path with tension applied thereto and guide it to intermediate shaped body 390.

Laser oscillation source 332 oscillates the laser beam directed to at least one of thin-film body 380 and intermediate shaped body 390.

No particular limitation is imposed on the type of laser oscillation source 332, and the laser can be appropriately selected from solid lasers such as a ruby laser, a YAG laser, a Nd:YAG laser, and a diode-pumped solid laser, liquid lasers such as a dye laser, gas lasers such as a CO₂ laser, and semiconductor lasers.

It is only necessary the laser be such that its energy allows the resin composition forming at least one of thin-film body 380 and intermediate shaped body 390 to be melted and does not cause deterioration, deformation, etc. of the resin composition. The power of the laser can be selected in the range of from 50 W to 5 kW inclusive.

Preferably, the laser beam has a wavelength that is absorbed by the resin composition that forms at least one of thin-film body 380 and intermediate shaped body 390. The wavelength of the laser beam can be selected in the range of, for example, from 300 nm to 3000 nm inclusive.

Laser irradiation section 334 is connected to laser oscillation source 332 through an optical fiber so as to be optically communicated therewith and emits the laser beam oscillated by laser oscillation source 332 while the laser beam is focused through an objective lens. Specifically, laser irradiation section 334 emits the laser beam such that at least one of thin-film body 380 and intermediate shaped body 390 is irradiated with the laser beam immediately before or when moving thin-film body 380 comes into contact with intermediate shaped body 390. More specifically, laser irradiation section 334 emits the laser beam such that at least one of thin-film body 380 and intermediate shaped body 390 irradiated with the laser beam has already been melted when thin-film body 380 in contact with at least intermediate shaped body 390 is pressed down by pressing roller 340.

Pressing roller 340 presses thin-film body 380 disposed in contact with rough surface 395 of intermediate shaped body 390 down against intermediate shaped body 390. With at least one of thin-film body 380 and intermediate shaped body 390 melted, thin-film body 380 is pressed down against intermediate shaped body 390, and thin-film body 380 and intermediate shaped body 390 are fused together.

Fusing unit 350 holds guide rollers 320a and 320b, laser irradiation section 334, and pressing roller 340. For example, fusing unit 350 may be configured such that the above components are housed inside a robot arm and that the position at which thin-film body 380 is fused to the surface of intermediate shaped body 390 can be adjusted by the vertical, translational, or rotational movement of the robot arm.

Holding stage 360 holds intermediate shaped body 390. Holding stage 360 may be, for example, a mandrel that holds intermediate shaped body 390 while it is rotated.

In the present embodiment, fusing apparatus 300 includes a moving section (not shown) that moves at least one of holding stage 360 and fusing unit 350. The moving section causes at least one of holding stage 360 and fusing unit 350 to move vertically, translationally, or rotationally, and the relative positions of thin-film body 380 and intermediate shaped body 390 are thereby changed at substantially the same speed as the moving speed of thin-film body 380, so that the position at which thin-film body 380 is joined to rough surface 395 of intermediate shaped body 390 can be moved. Fusing unit 350 fuses thin-film body 380 along rough surface 395 while the moving section moves the joint position, and a resin shaped body including thin-film body 380 fused to rough surface 395 of intermediate shaped body 390 is thereby produced.

Fusing apparatus 300 may fuse thin-film body 380 not only to rough surface 395 of intermediate shaped body 390 but also to a surface of intermediate shaped body 390 that does not satisfy the requirement on the maximum peak height (Rp) or the maximum valley depth (Rv) described above. In this manner, the resin shaped body obtained can have more uniform roughness.

Fusing apparatus 300 may further fuse thin-film body 380 to the surface of thin-film body 380 fused to rough surface 395 of intermediate shaped body 390 or the surface that does not satisfy the requirement on the maximum peak height (Rp) or the maximum valley depth (Rv) described above to thereby form a plurality of layers each formed from thin-film body 380. In this case, the resin shaped body obtained can have higher surface strength.

In this case, no particular limitation is imposed on the direction in which thin-film body 380 is fused to the surface of intermediate shaped body 390. When a plurality of layers each formed from thin-film body 380 are fused, fusing apparatus 300 may fuse thin-film body 380 forming these layers such that, in the combination of the layers formed, the reinforcing fibers are aligned in the same direction or may fuse thin-film body 380 in different directions for different layers such that, in the combination of the layers formed, the alignment directions of the reinforcing fibers differ from each other. From the viewpoint of increasing the pliability and compression resistance of the resin shaped body, it is preferable that fusing apparatus 300 fuses thin-film body 380 in different directions for different layers such that, in the combination of the layers formed, the alignment directions of the reinforcing fibers in two adjacent layers differ from each other.

### 2. Resin shaped body

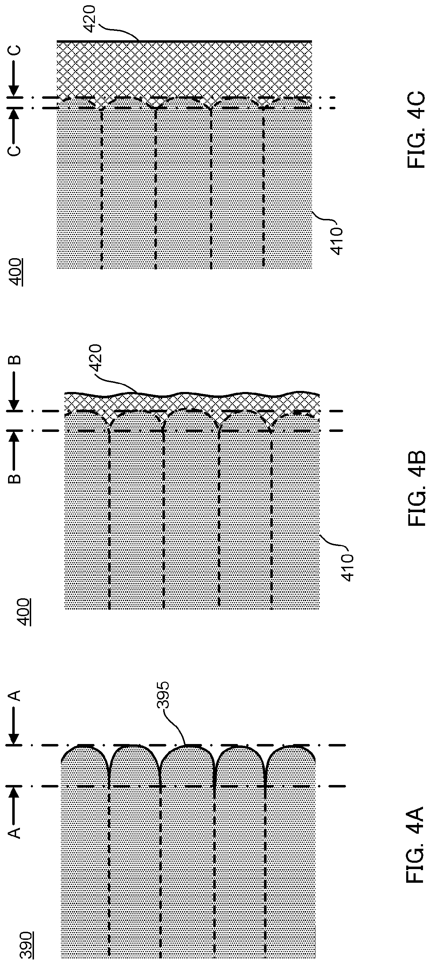

FIG. 4A is a schematic illustration showing a cross-sectional shape of an intermediate shaped body used to manufacture a resin shaped body according to an embodiment of the present invention, and FIGS. 4B and 4C are schematic illustrations showing cross-sectional shapes of the resin shaped body manufactured by the above method using the intermediate shaped body shown in FIG. 4A. FIGS. 4A to 4C show cross sections of the intermediate shaped body formed by the MEX method and the resin shaped body including a tape-shaped thin-film body fused to the rough surface of the intermediate shaped body. A cross section of a resin shaped body manufactured by fusing a tape-shaped thin-film body to the rough surface of an intermediate shaped body formed by another additive manufacturing method such as the PBF method by irradiation with a laser beam is substantially the same as those in FIGS. 4B and 4C except for the inner structure of the intermediate layers.

As shown in FIG. 4A, intermediate shaped body 390 has rough surface 395. As shown in FIGS. 4B and 4C, resin shaped body 400 manufactured by the above-described method including fusing the thin-film body to rough surface 395 of intermediate shaped body 390 includes inner layer 410 derived from intermediate shaped body 390 and surface layer 420 derived from the thin-film body. Rough surface 395 of the intermediate shaped body is melted by irradiation with the laser beam from laser irradiation section 334, and thin-film body 380 is fused thereto. Simultaneously, the compressive force by pressing roller 340 acts on thin-film body 380, and surface layer 420 is thereby flattened. FIG. 4B shows the state in which the number of fused thin-film body layers is one, and FIG. 4C shows the state in which the number of fused thin-film body layers is two or more. By irradiating surface layer 420 of the fused thin-film body with the laser beam, 420 is remelted as shown in FIG. 4B. In addition, since surface layer 420 is in the form of a thin film, rough surface 395 is also remelted, and a second layer formed from thin-film body 380 is fused. Simultaneously, the compressive force by pressing roller 340 acts on the second layer, and surface layer 420 is further flattened. When two or more layers are stacked as shown in FIG. 4C, the outer surface of surface layer 420 is further flattened.

Inner layer 410 is a layer forming the inside of the resin shaped body. When the intermediate shaped body is formed by, for example, the MEX method, inner layer 410 is a layer obtained by stacking thin layers of the resin composition fused together. When the intermediate shaped body is formed by the PBF method, inner layer 410 is a layer formed by sintering or fusing particles of the resin composition together,

Surface layer 420 is a layer fused to inner layer 410, disposed on the outer surface side of inner layer 410 of the resin shaped body, and containing the aligned reinforcing fibers. Surface layer 420 is disposed and positioned so as to cover the rough surface of the intermediate shaped body. For example, when inner layer 410 is derived from the intermediate shaped body formed by the MEX method, surface layer 420 is disposed in contact with the plurality of stacked layers forming inner layer 410. When inner layer 410 is derived from the intermediate shaped body formed by the PBF method, surface layer 420 is disposed in contact with the plurality of sintered or fused particles forming inner layer 410.

In surface layer 420, the reinforcing fibers are present as carbon fiber bundles aligned in one direction and extend in the fusing direction of the thin-film body. Typically, surface layer 420 contains a plurality of fiber bundles derived from the fused thin-film body. When, for example, another layer of the thin-film body is further fused to the surface of the previously fused layer of the thin-film body, surface layer 420 may include thereinside a plurality of layers stacked from the interface with inner layer 410 toward the outside (surface) of resin shaped body 400. In this case, each of the plurality of layers may contain a plurality of fiber bundles extending in plane directions. In the plurality of layers, the alignment directions of the reinforcing fibers forming the fiber bundles may differ for different layers.

As is clear from FIGS. 4A to FIG. 4C, rough surface 395 of intermediate shaped body 390 is melted when fused to the thin-film body and is deformed such that the maximum peak height (Rp) and maximum valley depth (Rv) of rough surface 395 are reduced. Specifically, the extent of the irregularities (A-A in FIG. 4A) on rough surface 395 of intermediate shaped body 390 shown in FIG. 4A is reduced when the thin-film body is fused, and the extent of the irregularities (B-B in FIG. 4B) at the interface between inner layer 410 and surface layer 420 of resin shaped body 400 becomes smaller as shown in FIG. 4B. When the number of fused layers formed from thin-film body 380 is increased, the extent of the irregularities (C-C in FIG. 4C) at the interface between inner layer 410 and surface layer 420 of resin shaped body 400 is further reduced.

By fusing the thin-film body to intermediate shaped body 390 in the manner described above, rough surface 395 is melted and deformed, and this may allow the thin-film body to extend into the bottoms of the valleys of rough surface 395 sufficiently. Intermediate shaped body 390 and the thin-film body may thereby be fused together more firmly, joined together with no gap therebetween, and bonded together more strongly.

In resin shaped body 400, the interface between inner layer 410 and surface layer 420 is melted and then solidified, and inner layer 410 and surface layer 420 are fused together completely. Therefore, in resin shaped body 400, delamination between inner layer 410 and surface layer 420 is unlikely to occur, and the peel strength of surface layer 420 derived from the thin-film body is 4000 N/m or more as measured by a 45° peel test.

The peel strength may be tested as follows. A tape is placed on an intermediate shaped body such that one end portion of the tape remains unfused, and this end portion is held by a measurement apparatus. If the end portion is also fused, the end portion is gently peeled off, and the test is performed with the peeled end portion held by the measurement apparatus.

### [Examples]

The present invention will next be described more specifically with refence to Examples, but the scope of the present invention is not limited to the description in the Examples.

### 1. Production of intermediate shaped bodies

### 1-1. Production of intermediate shaped body by MEX method

60 Parts by mass of a propylene polymer (R350G manufactured by Prime Polymer Co., Ltd.), 35 parts by mass of glass fiber chopped strands (HP3273 manufactured by Nippon Electric Glass Co., Ltd.), 5 parts by mass of a thermoplastic elastomer (A1040S manufactured by Mitsui Chemicals, Inc., α-olefin-based random copolymer), and a master batch containing carbon black (PEONY BLACK BMB-16117 manufactured by DIC Corporation, carbon black content: 40%) were mixed using a twin screw extruder to thereby obtain a resin composition. In this case, the content of the carbon black based on the total mass of the resin composition was adjusted to 1mass%.

Using an MEX forming apparatus manufactured by AFPT (an apparatus prepared by attaching a 3 mm nozzle to an extruder (ExOn 8 manufactured by Dohle Extrusionstechnik GmbH on an arm of Robot: IRB 6640-185/2.8 (ABB Ltd.)), the resin composition was heated to 220°C and melted, and the molten resin composition was extruded from the φ3 mm nozzle onto a stage and stacked to produce intermediate shaped body F1 having a width of 5 mm, a length of 500 mm, and a height of 37.5 mm. The moving speed of the nozzle was 0.038 m/s, and the ejection amount of the extruder was 1 kg/h. The height of one layer was 1.5 mm, and its width was 5 mm. The number of stacked layers was 25.

### 1-2. Production of intermediate shaped body by SLS method

The resin composition described in 1-1 was pulverized to obtain a powdery material with an average particle diameter of 100 µm, and the powdery material was used to produce intermediate shaped body S1 having the same shape as that of intermediate shaped body F1 using RICOH AM S5500p as a forming apparatus by the SLS method. The process temperature was 230°C.

### 2. Production of thin-film body

### (Removal of sizing agent)

A carbon fiber tow (product name: PYROFIL TR50S12L manufactured by MITSUBISHI RAYON Co., Ltd., number of filaments: 12000, strand strength: 5000 MPa, strand elastic modulus: 242 GPa) was immersed in acetone and subjected to ultrasonic treatment for 10 minutes. The resulting carbon fiber tow was removed from acetone, washed three times with acetone, and dried at room temperature for 8 hours.

### (Preparation of emulsion)

A propylene-butene-ethylene copolymer having no melting point and having a weight average molecular weight (Mw) of 120,000 as measured by GPC was used as a propylene-based polymer (A). 96 Parts by mass of a propylene-butene copolymer, 4 parts by mass of maleic anhydride, and 0.4 parts by mass of PERHEXA 25B manufactured by NOF CORPORATION ("PERHEXA" is a registered trademark of NOF CORPORATION) and used as a polymerization initiator were mixed and modified at a heating temperature of 160°C for 2 hours to obtain a maleic anhydride-modified propylene-based polymer (weight average molecular weight (Mw) = 27,000, acid value: 45 mg-KOH/g, maleic anhydride content: 4mass%, melting point: 140°C), and the maleic anhydride-modified propylene-based polymer was used as a propylene-based polymer (B). 100 Parts by mass of the propylene-based polymer (A), 10 parts by mass of the propylene-based polymer (B), and 3 parts by mass of potassium oleate used as a surfactant were mixed to obtain a mixture. The mixture was supplied from a hopper of a twin screw extruder (PCM-30 manufactured by Ikegai Ironworks Corp., L/D = 40) at a rate of 3000 g/hour and continuously extruded at a heating temperature of 210°C while a 20% aqueous potassium hydroxide solution was continuously suppled from a supply port provided in a vent portion of the extruder at a rate of 90 g/hour. The extruded resin mixture was cooled in a static mixer equipped with a jacket and disposed at the extrusion port of the extruder to 110°C and charged into warm water at 80°C to thereby obtain an emulsion with a solid content of 45%.

### (Production of reinforcing fiber bundles)

A roller impregnation method was used to cause the emulsion to adhere to the carbon fiber tow from which the sizing agent had been removed. Next, the resulting carbon fiber tow was dried on-line at 130°C for 2 minutes to remove low-boiling point components, and reinforcing fiber bundles were thereby obtained. The adhesion amount of the emulsion was 0.87%. The fluff quality of the reinforcing fiber bundles was rated pass.

### (Production of fiber reinforced resin sheet)

A resin composition containing 57 parts by mass of the reinforcing fiber bundles and 43 parts by mass of a matrix resin was prepared. The matrix resin contained an unmodified propylene resin (Prime Polypro J106MG manufactured by Prime Polymer Co., Ltd., melting point: 160°C) and modified polypropylene grafted with 0.5mass% of maleic anhydride (melt flow rate measured at 190°C and a load of 2.16 kg according to ASTM D1238: 9.1 g/10 min, melting point: 155°C). The mass ratio of the unmodified propylene resin to the modified polypropylene used to prepare the matrix resin (the unmodified propylene resin / the modified polypropylene) was 90/10. The melting point of the matrix resin was 160°C. This matrix resin was used to produce a fiber reinforced resin sheet containing the fibers aligned in one direction (this sheet is hereinafter referred to also as a unidirectional sheet) using a routine method.

Specifically, the reinforcing fiber bundles were opened and heated, and the heated reinforcing fiber bundles and the matrix resin melted using an extruder were shaped into a film form using a T die. The film-shaped product was sandwiched between release paper sheets and heated and pressed using pressing rollers to impregnate the reinforcing fiber bundles with the matrix resin, and the resulting film was cooled and solidified to thereby obtain a unidirectional sheet. The temperatures of the extruder and the T die were 250°C, and the temperature of the pressing rollers was 275°C. The thickness of the obtained unidirectional sheet was 130 µm, and the volume fraction Vf of the fibers was 0.4.

### (Production of tape-shaped thin-film body)

The above unidirectional sheet was cut to a width of 12 mm in the alignment direction of the carbon fibers to thereby obtain a tape-shaped thin-film body.

### 3. Production of resin shaped bodies (tape placement forming)

A laser fusing apparatus (STWH INB manufactured by AFPT) was used to fuse one or a plurality of layers formed from the tape-shaped thin-film body to the surface of one of the intermediate shaped bodies to thereby obtain a resin shaped body. The wavelength of the laser beam in this case was 960 to 1070 nm. The moving speed of the head was 0.5 m/second, and the temperature was set to 230°C. In this case, the tape was applied to the side circumferential surfaces of the intermediate shaped body such that the tape was parallel to the circumferential directions of the side circumferential surfaces and to the upper and lower surfaces such that the tape was parallel to the length direction of the intermediate shaped body.

One layer of the thin-film body was fused to the entire surface of intermediate shaped body F1 to thereby obtain resin shaped body F1.

Two layers of the thin-film body were fused to the entire surface of another intermediate shaped body F1 to thereby obtain resin shaped body F2.

One layer of the thin-film body was fused to the entire surface of intermediate shaped body S1 to thereby obtain resin shaped body S1.

### 4. Measurement and evaluation

The surface roughness of each of the resin shaped bodies, its peel strength, and its interfacial shape were measured by the following methods.

### 4-1. Surface roughness

A surface roughness tester SURFCOM 1400 manufactured by TOKYO SEIMITSU Co., Ltd. was used to measure the arithmetic average roughness (Ra), maximum peak height (Rp), and maximum valley depth (Rv) of each of intermediate shaped body F1, resin shaped body F1, resin shaped body F2, intermediate shaped body S1, and resin shaped body F2 according to JIS B 0601 (2013) under the following conditions.

Contact needle type: a probe with a tip diameter of 5 µm was used.
Length: 12.5 mm
Cut off: 2.5 mm
Speed: 0.15 mm/s

### 4-2. Peel strength

The tape placement was performed on each intermediate shaped body such that an end portion of the tape-shaped thin-film body that had a length of 200 mm was not fused to the intermediate shaped body, and a resin shaped body was thereby manufactured. The surface of the resin shaped body on which the tape had been placed was used as an upper surface, and the lower surface of the resin shaped body was fixed. The unfused end of the tape was attached to a spring balance and pulled at an angle of 45°, and the load when the thin-film body was forcedly peeled off was recorded. The average peeling force was normalized using the width of the peeled surface, and the peel strength (N/m) was thereby measured.

### 4-3. Bending strength

Each of intermediate shaped body F1, resin shaped body F1, resin shaped body F2, intermediate shaped body S1, and resin shaped body F2 was cut to a length of 51 mm and a height of 13 mm to thereby produce a sample.

The bending strength (MPa) of each sample was measured according to ASTM D790 under the conditions of a test speed of 1.2 to 1.3 mm/min and a span distance of 44 to 46 mm that were changed according to the thickness of the sample.

### 4-4. Bending modulus

The bending modulus (MPa) of each sample was measured according to ASTM D790 under that conditions of a test speed of 1.2 to 1.3 mm/min and a span distance of 44 to 46 mm that were changed according to the thickness of the sample.

The results are shown in Table 1.

**[Table 1]**

| Sample | Roughn ess Ra (µm) | Maximum peak height Rp (µm) | Maximum valley depth Rv (µm) | Bending modulus (MPa) | Bending strength (MPa) | 45° peel test (N/m) | Form of peeling |
|---|---|---|---|---|---|---|---|
| Intermediate shaped body F1 | 16.05 | 45.35 | 52.43 | 5004 | 83.7 | - | - |
| Resin shaped body F1 | 12.61 | 36.06 | 25.83 | 11342 | 161.2 | 5600 | Tape was ruptured |
| Resin shaped body F2 | 7.22 | 20.30 | 17.80 | 15246 | 203.3 | 6800 | Tape was ruptured |
| Intermediate shaped body S1 | 7.43 | 25.64 | 21.20 | 1446 | 16.45 | - | - |
| Resin shaped body S1 | 5.72 | 18.30 | 17.60 | 9623 | 102.1 | 4100 | Interfacial peeling |

Each of the intermediate shaped bodies formed of a resin composition had a rough surface having a maximum peak height (Rp) of from 10 µm to 5000 µm inclusive as measured according to JIS B 0601 or a maximum valley depth (Rv) of from 10 µm to 5000 µm inclusive as measured according to JIS B 0601. The thin-film body formed of a resin composition containing reinforcing fibers aligned in one direction was fused to the rough surface of the intermediate shaped body by irradiation with a laser beam. In this case, the resin shaped body produced had a smoother surface.

This application claims priority based on Japanese Patent Application No. 2018-248105 filed on December 28, 2018, and the contents described in the claims, description, and drawings in the Japanese Patent Application are incorporated herein by reference.

### Industrial Applicability

According to the resin shaped body manufacturing method of the present invention, a resin shaped body having a smoother surface can be obtained because surface irregularities specific to a shaped body formed by an additive manufacturing method can be removed irrespective of the type of additive manufacturing method for manufacturing the resin shaped body. It is therefore expected that the resin shaped body manufacturing method of the present invention can extend the usable range of shaped bodies formed by additive manufacturing methods and contributes to further spread of this field.

### Reference Signs List

- 110: Nozzle
- 120: Stage
- 130: Intermediate shaped body
- 135: Rough surface
- 212: Laser oscillation source
- 214: Laser irradiation section
- 220: Stage
- 230: Intermediate shaped body
- 235a, 235b: Rough surface
- 300: Fusing apparatus
- 310: Housing section
- 320a, 320b: Guide roller
- 332: Laser oscillation source
- 334: Laser irradiation section
- 340: Pressing roller
- 350: Fusing unit
- 360: Holding stage
- 380: Thin-film body
- 390: Intermediate shaped body
- 395: Rough surface
- 400: Resin shaped body
- 410: Inner layer
- 420: Surface layer

## Claims

1. A method for manufacturing a resin shaped body, the method comprising fusing a thin-film body to an intermediate shaped body formed of a resin composition, wherein:
the intermediate shaped body is an intermediate shaped body formed of the resin composition and having a rough surface having a maximum peak height (Rp) of from 10 µm to 5000 µm inclusive as measured according to JIS B 0601 or a maximum valley depth (Rv) of from 10 µm to 5000 µm inclusive as measured according to JIS B 0601;
the thin-film body is a thin-film body formed of a resin composition containing reinforcing fibers aligned in one direction; and
the thin-film body is fused to the rough surface of the intermediate shaped body by irradiation with a laser beam.

2. The method for manufacturing a resin shaped body according to claim 1, wherein:
the intermediate shaped body is a shaped body formed of a resin composition containing a thermoplastic resin.

3. The method for manufacturing a resin shaped body according to claim 2, wherein:
the thermoplastic resin contains a propylene-based polymer.

4. The method for manufacturing a resin shaped body according to claim 2, wherein:
the thermoplastic resin contains a propylene-based polymer and an α-olefin-based polymer (excluding the propylene-based polymer).

5. The method for manufacturing a resin shaped body according to any one of claims 1 to 4, wherein:
the intermediate shaped body is a shaped body formed of a resin composition containing the same resin as the resin forming the thin-film body.

6. The method for manufacturing a resin shaped body according to any one of claims 1 to 5, wherein:
during the fusing, the intermediate shaped body or the thin-film body is irradiated with the laser beam under the condition that the intermediate shaped body or the thin-film body is heated to a temperature at which at least one of the resin composition forming the intermediate shaped body and the resin composition containing the thin-film body is melted.

7. The method for manufacturing a resin shaped body according to any one of claims 1 to 6, wherein:
the intermediate shaped body is a shaped body formed of a resin composition containing a coloring agent that absorbs light with the same wavelength as the wavelength of the laser beam used for the irradiation during the fusing.

8. The method for manufacturing a resin shaped body according to any one of claims 1 to 7, wherein:
the rough surface of the intermediate shaped body has a maximum peak height (Rp) of from 20 µm to 450 µm inclusive as measured according to JIS B 0601 or a maximum valley depth (Rv) of from 20 µm to 450 µm inclusive as measured according to JIS B 0601.

9. The method for manufacturing a resin shaped body according to any one of claims 1 to 7, wherein:
the rough surface of the intermediate shaped body has a maximum peak height (Rp) of from 10 µm to 100 µm inclusive as measured according to JIS B 0601 or a maximum valley depth (Rv) of from 10 µm to 100 µm inclusive as measured according to JIS B 0601.

10. The method for manufacturing a resin shaped body according to any one of claims 1 to 9, wherein:
the rough surface of the intermediate shaped body has an arithmetic average roughness Ra of from 5 µm to 1250 µm inclusive as measured according to JIS B 0601.

11. The method for manufacturing a resin shaped body according to any one of claims 1 to 10, wherein:
the intermediate shaped body is a shaped body manufactured by an additive manufacturing method.

12. The method for manufacturing a resin shaped body according to claim 11, wherein:
the intermediate shaped body is a shaped body manufactured by a material extrusion (MEX) method or a powder bed fusion (PBF) method.

13. A resin shaped body comprising:
an inner layer prepared by fusing and stacking together thin layers formed of a resin composition or sintering or fusing together particles of the resin composition; and
a surface layer fused to the inner layer and formed of a resin composition containing aligned reinforcing fibers, the surface layer being disposed in contact with the stacked layers or disposed in contact with the sintered or fused particles.

14. The resin shaped body according to claim 13, wherein:
the interface between the inner layer and the surface layer is fused; and
the peel strength of the surface layer is 4000 N/m or more as measured by a 45° peel test.
